(19) Europäisches Patentamt
European Patent Office
Office européen des brevets

(11) Publication number: **0 142 804**
**A2**

(12) # EUROPEAN PATENT APPLICATION

(21) Application number: 84113611.2

(22) Date of filing: 11.11.84

(51) Int. Cl.⁴: C 01 B 17/05

(30) Priority: 14.11.83 US 551631

(43) Date of publication of application:
29.05.85 Bulletin 85/22

(84) Designated Contracting States:
BE CH DE FR GB IT LI NL SE

(71) Applicant: STAUFFER CHEMICAL COMPANY
Westport Connecticut 06880(US)

(72) Inventor: Donahue, Raymond James
433 Haviland Drive
Patterson, NY 12563(US)

(72) Inventor: Hayford, John Sumner
29 Tremont Avenue
Stamford, CT 06906(US)

(74) Representative: Jaeger, Klaus, Dr. et al,
JAEGER & PARTNER Patentanwälte Bergstrasse 48 1/2
D-8035 München-Gauting(DE)

(54) **Liquid phase Claus reaction.**

(57) The rate of sulfur formation is favored in reactions between a sulfur dioxide-rich absorbent and hydrogen sulfide if such a reaction is carried out at superatmospheric pressure while at a temperature no less than about the melting point of sulfur so as to increase the rate of destruction of undesired thiosulfate.

EP 0 142 804 A2

# LIQUID PHASE CLAUS REACTION

## Background of the Invention

It is known to absorb sulfur dioxide in a suitable absorbent, to form a sulfur dioxide-rich absorbent, followed by reaction of this absorbent with hydrogen sulfide to form sulfur. One such liquid phase Claus process of this type is described in U. S. Patent No. 3,911,093 to F. G. Sherif et al. In the process of recovering sulfur dioxide from waste gases as described in U. S. Patent No. 3,911,093 to F. G. Sherif et al., the pH of the lean aqueous sodium phosphate solution was maintained below 5.0. This was done because (1) operation above that pH results in formation of colloidal sulfur which is difficult to recover and (2) because the rate of thiosulfate formation via the following reaction sequence

$$3H^+ + 2HS^- + HSO_3^- \longrightarrow 3S + 3H_2O$$

$$S + HSO_3^- \longrightarrow S_2O_3^{=} + H^+$$

at temperatures below about 80°C. - 100°C. is much greater than the rate of thiosulfate destruction via the reaction

$$4H + 2HS^- + S_2O_3^{=} \longrightarrow 4S + 3H_2O$$

However, there is a significant economic incentive in operating at a pH of about 5.0 or above. The amount of sulfur dioxide that the sodium phosphate liquor can absorb at higher pH values increases several-fold permitting significant economies in both process capital and operating costs.

The rate of thiosulfate destruction is influenced by such factors as temperature, hydrogen sulfide partial pressure, pH and thiosulfate concentration.

U. S. Patent No. 2,690,961 to C. D. Keith describes reaction of hydrogen sulfide and sulfur dioxide at atmospheric pressure in a colloidal sulfur reactor at temperatures of from 70°F. to 130°F. The resulting mixture comprising elemental sulfur and polythionic acids is then heated to high temperatures (250°F. - 350°F.) under pressure to convert the sulfur values in the polythionic acids to molten sulfur. The reaction of hydrogen sulfide and sulfur dioxide in the Keith patent is, however, not conducted at superatmospheric pressure or at temperatures no less than about the melting point of sulfur. Also, the Keith process yields colloidal sulfur, which is difficult to separate from solution in contrast to the formation of the easier-to-remove crystalline sulfur produced in the Sherif et al. process which uses a suitably buffered aqueous absorbent.

## Summary of the Invention

It has now been found that by operation of the aforementioned reaction of hydrogen sulfide and sulfur dioxide at superatmospheric pressure and at temperatures no less than about the melting point of sulfur, it is possible to improve the rate of the reverse reaction favoring sulfur formation even when the pH of the system is increased. This allows for operation of the above type of $SO_2/H_2S$ reaction process over a wider pH range.

## Detailed Description of the Present Invention

The general type of process to which the present invention is applicable is known. Such processes involve the absorption of sulfur dioxide in a suitable aqueous absorbent to form a sulfur dioxide-rich absorbent followed by its reaction with hydrogen sulfide to form elemental sulfur. Examples of suitable absorbents include such aqueous buffered absorbents as those containing alkali metal phosphates and alkali metal citrates. Examples of processes of this type are shown in U. S. Patent Nos. 3,911,093 to F. G. Sherif et al., and 3,983,225 to L. Van Brocklin et al.

In the above type of process it has now been found that the reverse reaction favoring sulfur formation can be favored, with a concomitant destruction of thiosulfate, by conducting the process at superatmospheric pressure at a temperature no less than about the melting point of sulfur. The total pressure can range, for example, anywhere from about 2 atmospheres to about 300 atmospheres, preferably from about 3 to about 100 atmospheres, most preferably 3 - 20 atmospheres. The temperature can range from about 120°C. to about 320°C., preferably from about 120°C. to about 160°C.

The present invention is further illustrated by the Examples which follow.

EXAMPLE 1

This Example describes the general procedure used to generate the data found in Example 2.

A 3 liter stainless steel, jacketed, agitated reactor was charged with 2.2 liters of 1.4 M sodium phosphate solution. The sodium to phosphate ratio was approximately 1.08:1, and the solution pH was 5.3. Sodium thiosulfate was added to give a thiosulfate concentration of 23.9 gms/liter. The agitator was turned on, and the reactor was heated to 130°C. by adjusting the steam to the reactor jacket. Hydrogen sulfide was sparged into the reactor below the agitator at a rate of 2.8 liters/min., and the back pressure control valve was adjusted to give the desired operating pressure. Samples of the phosphate solution were taken at the beginning of the experiment and at 5 minute intervals for a total of 30 minutes. These samples were analyzed for thiosulfate content and pH.

EXAMPLE 2

Using the general procedure described in Example 1 the following data was obtained:

## EXAMPLE 2

| Run No. | Temp. (°C) | Total Pressure (atm) | $H_2S$ Partial Press. (atm) | $S_2O_3^{=}$ Initial Conc. gm/l. | Initial pH | $\left(\frac{\Delta S_2O_3^{=}}{\Delta T}\right)$ 15 min. ave. (gm/l. x min.) |
|---|---|---|---|---|---|---|
| 1* | 65 | 5.08 | 4.83 | 24.7 | 5.0 | 0.09 |
| 2 | 130 | 3.04 | 0.38 | 23.9 | 5.0 | 0.47 |
| 3 | 130 | 3.04 | 0.38 | 25.2 | 5.3 | 0.64 |
| 4 | 130 | 3.04 | 0.38 | 75.1 | 5.0 | 0.71 |
| 5 | 130 | 3.04 | 0.38 | 73.4 | 4.9 | 0.83 |
| 6 | 130 | 3.04 | 0.38 | 72.9 | 4.9 | 0.75 |
| 7 | 130 | 5.08 | 2.41 | 26.0 | 5.2 | 1.38 |
| 8 | 130 | 5.08 | 2.41 | 24.6 | 4.9 | 1.24 |
| 9 | 130 | 5.08 | 2.41 | 72.1 | 5.2 | 1.99 |
| 10 | 130 | 5.08 | 2.41 | 72.5 | 4.9 | 2.00 |
| 11 | 130 | 5.08 | 2.41 | 25.1 | 5.8 | 0.94 |
| 12 | 150 | 5.08 | 0.39 | 25.8 | 4.9 | 1.05 |

* not part of the present invention.

The thiosulfate decomposition rate data given above is the average rate obtained for the fifteen minute period after the run was begun.

The above data illustrate the effects of temperature, $H_2S$ partial pressure, $S_2O_3^=$ level and pH on the rate of $S_2O_3^=$ decomposition. Comparing runs 1, 2 and 12, we note the marked effect of temperature on this rate. At a temperature below the melting point of sulfur (e.g., run No. 1) even a very high $H_2S$ partial pressure does not compensate for the low temperature. Runs 3 and 7 show the effect of increasing the $H_2S$ partial pressure when the temperature is above the melting point of sulfur. Runs 8 and 10 and Runs 2 and 5 illustrate the positive effect of $S_2O_3^=$ level on the rate of decomposition. Finally, runs 8 and 11 illustrate the adverse effect of low $H^+$ concentration (high pH) on $S_2O_3^=$ rate of decomposition.

The foregoing Examples should be taken as merely showing certain embodiments of the present invention but should not be construed in a limiting sense. The scope of protection sought is given in the claims which follow.

What is Claimed:

1. In the method of reacting a sulfur dioxide-rich absorbent with hydrogen sulfide to form sulfur, wherein the improvement comprises conducting said reaction under superatmospheric pressure at a temperature of no less than about the melting point of sulfur in order to increase the rate of destruction of thiosulfate and thereby favor the formation of sulfur.

2. A process as claimed in Claim 1 wherein the absorbent is an aqueous phosphate absorbent.

3. A process as claimed in Claim 1 wherein the pressure is from about 2 atmospheres to about 300 atmospheres.

4. A process as claimed in Claim 2 wherein the pressure is from about 3 atmospheres to about 100 atmospheres.

5. A process as claimed in Claim 1 wherein the temperature is from about 120°C. to about 320°C.

6. A process as claimed in Claim 2 wherein the temperature is from about 120°C. to about 160°C.

7. A process as claimed in Claim 1 wherein the absorbent is an aqueous phosphate absorbent, the pressure is from about 2 atmospheres to about 300 atmospheres, and the temperature is from about 120°C. to about 160°C.

8. A process as claimed in Claim 7 wherein the pressure is from about 3 atmospheres to about 100 atmospheres and the temperature is from about 120°C. to about 160°C.